# EUROPEAN PATENT APPLICATION

(11) **EP 1 926 206 A1**
(43) Date of publication of application: **28.05.2008**
(21) Application number: 06124006.5
(22) Date of filing: 14.11.2006
(51) Int. Cl.: H02P 23/00

(54) **Frequency converter**

(71) Applicant: ABB Oy, 00380 Helsinki (FI)
(72) Inventor: Niemi, Erkki, 02660, Espoo (FI)
(74) Representative: Holmström, Stefan Mikael

(57) **Abstract**

The invention relates to a frequency converter (1) comprising: a processor (2), a memory (3) containing software, which during operation of the frequency controller (1) is executed by said processor for controlling the operation of the frequency converter, and a serial interface (7). In order to provide a solution for retrieving and analyzing parameters available from the frequency converter in an easy and cost efficient way, said frequency converter is configured to store during use of the frequency converter parameters relating to the operation of said frequency converter to a detachable memory (8) attached to said serial interface (7).

## Description

### BACKGROUND OF THE INVENTION

### 1. Field of the Invention

This invention relates to service and maintenance of a frequency converter, and especially to the problem of obtaining information about parameters relating to the operation of a frequency converter.

### 2. Description of Prior Art

Previously there is known a frequency converter which during operation is capable of producing parameters relating to the operation of the frequency converter. If a malfunction occurs, for instance, these parameters can be used by maintenance personnel in order to analyze the circumstances which led to the malfunction, and eventually to ensure that similar malfunctions can be avoided in the future. In order to facilitate such an analysis, it is, however, necessary for the maintenance personnel to obtain access to the parameters.

Often the equipment cost of a frequency converter is an important issue, which in practice makes it impossible to implement remote monitoring of frequency converters via various communication networks. Instead a prior art solution is to send service personnel to the installation site of the frequency controller. In that case an ordinary PC computer is connected via a cable to an interface on the frequency converter. The used computer runs a specific software provided by the manufacturer of the frequency converter, which makes it capable of receiving and processing parameters relating to the operation of the frequency converter. As a result the service personnel can analyze the situation with the computer.

A drawback with the above mentioned prior art solution is that the customer who has bought a frequency converter from a manufacturer, seldom has available the necessary equipment or know-how needed for retrieving or analyzing the parameters which would be available from the frequency converter. Instead it becomes necessary that service personnel of the manufacturer pay a visit to the installation site of the frequency converter.

### SUMMARY OF THE INVENTION

An object of the present invention is to solve the above mentioned drawback and to provide a solution which makes it possible to retrieve and analyze the parameters available from a frequency converter in an easy and cost efficient way.

This object is achieved with a frequency converter according to independent claim 1 and a method according to independent claim 7.

In the present invention a detachable memory is utilized in order to obtain information about parameters relating to the operation of a frequency converter. This memory is attached to a serial interface of the frequency converter during use, which makes it possible for the frequency converter to store parameters in the memory. If a malfunction occurs or if the operation of the frequency converter needs to be analyzed for some other reason, the memory can be detached from the frequency converter and attached to an external computer. This makes it possible to retrieve the parameters from the memory for further processing.

In a preferred embodiment of the present invention, the detachable memory includes a software which can be executed by a computer and used for processing the parameters obtained from the frequency converter. The processing may involve analyzing and/or transmission via a communication network to a predetermined receiver.

The preferred embodiments of the frequency converter and method are disclosed in the dependent claims 2 to 6 and 8 to 9.

### BRIEF DESCRIPTION OF DRAWINGS

In the following the present invention will be described in closer detail by way of example and with reference to the attached drawings, in which

Figure 1 is block diagram illustrating a first embodiment of the present invention, and

Figure 2 is a flow chart illustrating a method according to an embodiment of the present invention.

### DESCRIPTION OF AT LEAST ONE EMBODIMENT

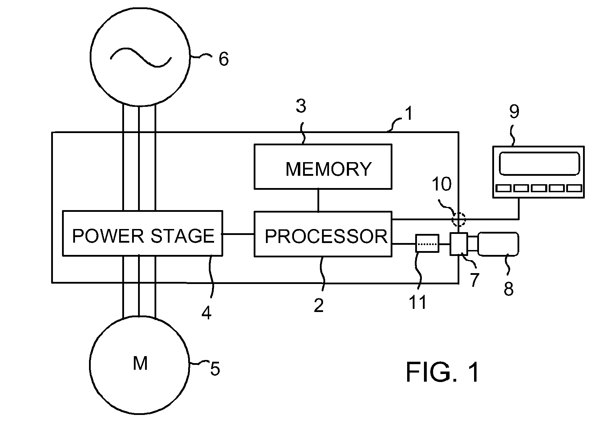

Figure 1 is block diagram illustrating a first embodiment of the present invention. Only those parts of the frequency converter 1 which are necessary for understanding the present invention are illustrated in Figure 1.

The frequency converter 1 comprises a processor 2 and a memory 3. The memory contains software which during operation of the frequency controller 1 is executed by the processor 2 for controlling the operation of the frequency controller 1.

In the example of Figure 1, the frequency controller 1 comprises a power stage 4, which controls the supply of electricity from an electric network 6 to a consumption device 5. The consumption device 5 is represented by an electric motor in Figure 1.

During operation the processor 2 executing the software stored in memory 3 produces parameters relating to the operation of the frequency converter. The term parameters is herein used to include also actual values. Alternatively such parameters can be produced by an additional processor, not shown in Figure 1. Some parameters may be based on information obtained from peripheral devices which are connected to the frequency converter. The produced parameters can be based on values measured by different detectors (not shown) which are connected to the processor, or alternatively of values calculated by the processor. Examples of such parameters are: output current (A), motor speed (rpm), frequency (Hz), torque (%) and temperature (°C). In practice there exists a plurality of other possible parameters which describe the operation of the frequency converter and which might be useful to have available for a later analysis, in case a malfunction occurs. Preferably the exact time, as indicated by a real time clock of the frequency converter, for instance, is stored in the memory in connection with the stored parameters.

The frequency converter 1 comprises a serial interface 7 where a detachable memory 8 is attached. This detachable memory is used by the frequency converter to store parameters relating to the operation of the frequency converter 1. The detachable memory functions as a log recording parameters during operation of the frequency converter 1. To use a serial interface has the advantage that it is in practice very easy to obtain the parameters from the frequency converter in a suitable format for storage in the detachable memory.

The storage of parameters into the detachable memory can be implemented as a datalogger or alternatively as a monitor, for instance. A datalogger is typically implemented as a program running with a short cycle and which involves triggering criteria's. Once a triggering criteria is met during the operation of the frequency converter, parameters relating to that specific moment of time are stored in the detachable memory. On the other hand, in case of a monitor, data is continuously stored in the detachable memory, however, with a rather slow storing rate.

The detachable memory 8 is preferably of a type which is compatible with an ordinary PC computer. This makes it possible to simply remove the detachable memory 8 from the serial interface 7 and attach it to the computer in order to further process the parameters with the computer. One alternative is to use a USB interface 7 and a USB memory stick as the detachable memory 8. The advantage of such a solution is that practically every modern PC computer includes a USB interface, which makes it possible to access the parameters stored on the detachable memory with any computer without any extra hardware or software. The price of a USB memory stick is low enough to make it possible to attach such a memory to frequency converters already during production, in which case the customer who has bought a frequency converter automatically receives a frequency converter capable of storing parameters in the detachable memory.

In a preferred embodiment of the invention, the detachable memory 8 contains software for further processing parameters stored on the detachable memory. In that case any available computer can be used for further processing of the stored parameters, as the software needed for such processing can be loaded to the computer from the detachable memory. Depending on the implementation, the software can be an analysis software which when executed by the computer retrieves the stored parameters from the detachable memory 8 and uses them for providing an analysis for the person using the computer. Alternatively, or in addition, the software can control the computer to send the retrieved parameters via a communication network to a predetermined receiver. In that case the manufacturer of the frequency converter can receive the parameters via email, for instance.

In a preferred embodiment the software for further processing and manuals relating to the frequency converter and to the software for further processing are stored in the detachable memory already during manufacturing. This makes it possible for the manufacturer to ensure that all customers indeed receive necessary information for operating the frequency converter. An advantage with such a solution is that no separate computer disks, for instance, are needed, which makes it easier for the customer who has bought the frequency converter to maintain the information (attached to the frequency converter itself) until needed.

The frequency converter of Figure 1 includes also a control panel 9. This control panel 9 can be a fixed part of the frequency converter or alternatively a detachable control panel which can be connected to any one of a plurality of frequency converters. In the example of Figure 1 it has been assumed that the control panel 9 is detachable, and that in this particular situation the control panel 9 has been attached to the frequency converter 1 via an interface 10.

In a preferred embodiment of the present invention, the control panel 9 can be used to define those parameters which the frequency converter 1 should store in the detachable memory 8. In that case the user is via the display and keyboard on the control panel 9 offered a possibility to select the specific parameters that the user wants to store in the memory 8. The selection made by the user is stored in memory 3 and taken into account when the frequency converter during operation stores parameters into memory 8.

In Figure 1 it is by way of example assumed that the serial interface 7 is galvanically separated by a suitable component 11. One alternative is to use optical circuitry in order to obtain the galvanic separation. The advantage with such a solution is that the detachable memory 8 can be detached from the frequency converter without a need of switching off the electric supply prior to removal of the detachable memory 8. It is, however, also possible to implement the invention without a galvanic separation, in which case the electric supply needs to be switched off before detachment of the memory 8. In that case it is also necessary (for safety reasons) to arrange the serial interface 7 under a cover that can not be opened without a suitable tool.

In still a preferred embodiment the detachable memory can be used for changing configurations of the frequency converter by using the detachable memory. In that case new data is stored on the detachable memory with an external computer. After this the detachable memory is attached to the serial interface of the frequency converter. In this embodiment the frequency converter may include a separate low voltage supply, such as 24 V, which is used for energizing only parts of the frequency converter (such as memory, control panel and serial interface) during the change of the configuration. The new data stored in the detachable memory is then stored in the memory of the frequency converter to be used by the processor when the frequency converter is taken into use for the next time. The storage of the new data can be controlled via the control panel 9.

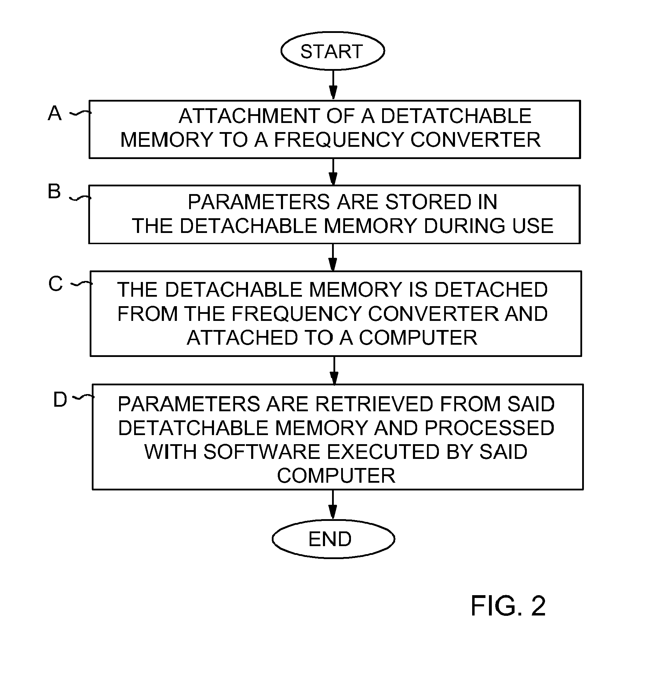

Figure 2 is a flow chart illustrating a method according to an embodiment of the present invention.

In block A a detachable memory, such as a USB memory stick, is attached to a frequency converter. This is preferably done during manufacturing of the frequency converter.

In block B parameters are stored in the detachable memory during use. The storage of parameters is preferably implemented by a processor of the frequency converter under control of a software executed by the processor. The parameters can include measured values originating from detectors, parameters calculated by the processor and parameters received from external devices which are attached to the frequency converter. The user of the frequency converter can be given an opportunity to define which parameters the user wants to have stored in the memory.

In block C the detachable memory is detached from the frequency converter and attached to a computer. This step can be implemented if some sort of malfunction has been detected in the operation of the frequency converter, or alternatively, in case the user of the frequency converter for some other reason decides to make an analysis of the operation of the frequency converter.

In block D the parameters are retrieved from the detachable memory and processed with a software executed by the computer. This processing may include analyzing on the computer in question and/or transmission of the retrieved parameters via a communication network to a predetermined receiver for analyzing. Preferably the software which is executed by the computer is stored on the detachable memory.

It is to be understood that the above description and the accompanying figures are only intended to illustrate the present invention. It will be obvious to those skilled in the art that the invention can be varied and modified also in other ways without departing from the scope of the invention.

## Claims

1. A frequency converter (1) comprising:
a processor (2),
a memory (3) containing software, which during operation of the frequency controller (1) is executed by said processor for controlling the operation of the frequency converter, and
a serial interface (7), **characterized in that**
said frequency converter is configured to store during use of the frequency converter parameters relating to the operation of said frequency converter to a detachable memory (8) attached to said serial interface (7).

2. The frequency converter according to claim 1, **characterized in that** said detachable memory (8) contains an analysis software for controlling a computer executing said analysis software to retrieve said parameters from said detachable memory (8), and to present information based on said retrieved parameters on a user interface of said computer.

3. The frequency converter according to claim 1 or 2, **characterized in that** said detachable memory (8) contains a software for controlling a computer executing said software to retrieve said parameters from said detachable memory (8), and to send said parameters via a communication network to a predetermined receiver.

4. The frequency converter according to any one of claims 1 to 3, **characterized in that** said serial interface (7) is a USB interface and said detachable memory (8) is a USB memory stick.

5. The frequency converter according to any one of claims 1 to 4, **characterized in that** said frequency converter (1) comprises a control panel (9) offering a user of said frequency converter a possibility to define those parameters which said frequency controller stores in said detachable memory (8).

6. The frequency converter according to any one of claims 1 to 5, **characterized in that** said serial interface (7) is galvanically separated.

7. A method of obtaining information from a frequency converter, **characterized in that** said method comprises:
providing (A) a serial interface (7) of said frequency converter (1) with a detachable memory (8),
storing parameters (B) describing the operation of the frequency converter (1) into said detachable memory (8) during use of said frequency converter (1),
detaching (C) said detachable memory (8) from said frequency converter,
attaching (C) said detachable memory (8) to an external computer, and
retrieving (D) said parameters from said detachable memory (8) to said computer for processing with a software executed by said computer.

8. The method according to claim 7, **characterized in that** said parameters are analyzed (D) with said software executed by said computer.

9. The method according to claim 7 or 8, **characterized in that** said parameters are transmitted (D) to a predetermined receiver via a communication network with said software executed by said computer.

## Amended claims

### Amended claims in accordance with Rule 137(2) EPC.

**1.** A frequency converter (1) comprising:
a processor (2),
a memory (3) containing software, which during operation of the frequency controller (1) is executed by said processor for controlling the operation of the frequency converter, and
a serial interface (7), **characterized in that**
said frequency converter is configured to store during use of the frequency converter parameters produced by the frequency converter or based on information obtained from peripheral devices and relating to the operation of said frequency converter to a detachable memory (8) attached to said serial interface (7), said detachable memory (8) being removable from the serial interface (7) and attachable to an external computer for further processing of said parameters with external computer.

**2.** The frequency converter according to claim 1, **characterized in that** said detachable memory (8) contains an analysis software for controlling a computer executing said analysis software to retrieve said parameters from said detachable memory (8), and to present information based on said retrieved parameters on a user interface of said computer.

**3.** The frequency converter according to claim 1 or 2, **characterized in that** said detachable memory (8) contains a software for controlling a computer executing said software to retrieve said parameters from said detachable memory (8), and to send said parameters via a communication network to a predetermined receiver.

**4.** The frequency converter according to any one of claims 1 to 3, **characterized in that** said serial interface (7) is a USB interface and said detachable memory (8) is a USB memory stick.

**5.** The frequency converter according to any one of claims 1 to 4, **characterized in that** said frequency converter (1) comprises a control panel (9) offering a user of said frequency converter a possibility to define those parameters which said frequency controller stores in said detachable memory (8).

**6.** The frequency converter according to any one of claims 1 to 5, **characterized in that** said serial interface (7) is galvanically separated.

**7.** A method of obtaining information from a frequency converter, **characterized in that** said method comprises:
providing (A) a serial interface (7) of said frequency converter (1) with a detachable memory (8),
storing parameters (B) produced by the frequency converter or based on information obtained from peripheral devices and describing the operation of the frequency converter (1) into said detachable memory (8) during use of said frequency converter (1),
detaching (C) said detachable memory (8) from said frequency converter,
attaching (C) said detachable memory (8) to an external computer, and
retrieving (D) said parameters from said detachable memory (8) to said computer for processing with a software executed by said computer.

**8.** The method according to claim 7, **characterized in that** said parameters are analyzed (D) with said software executed by said computer.

**9.** The method according to claim 7 or 8, **characterized in that** said parameters are transmitted (D) to a predetermined receiver via a communication network with said software executed by said computer.
